# EUROPEAN PATENT SPECIFICATION

(11) **EP 1 007 266 B1**
(45) Date of publication and mention of the grant of the patent: **13.06.2001**
(21) Application number: 98937704.9
(22) Date of filing: 20.08.1998
(51) Int. Cl.: B23K 20/12, H01R 4/62, H01R 4/02

(54) **A METHOD OF MAKING AN ELECTRICAL CONNECTOR BY FRICTION WELDING**
VERFAHREN ZUR HERSTELLUNG EINES ELEKTRISCHEN VERBINDERS DURCH REIBSCHWEISSEN
PROCEDE DE FABRICATION D'UN CONNECTEUR ELECTRIQUE PAR SOUDAGE PAR FRICTION

(30) Priority: 27.08.1997 EP 97401996
(43) Date of publication of application: 14.06.2000
(73) Proprietor: THE WHITAKER CORPORATION, Wilmington, DE 19808 (US)
(72) Inventor: DUPONT, André, F-21200 Fixin (FR)
(74) Representative: Jay, Anthony William
(86) International application number: IB9801292
(87) International publication number: WO9910124

(56) References cited:
- GB-A- 1 237 574
- GB-A- 1 431 219

## Description

This invention relates to a method of making an electrical connector with first and second connection sections mechanically and electrically interconnected by friction welding according to the preamble of claim 1 (see GB-A-1 237 574).

Certain connectors for electrical power transmission and distribution have two connection sections, a first connection section made of an aluminium alloy, and a second connection section made of a copper alloy. The aluminium connection section is for connection to aluminium (alloy) conductors that are used in the electrical transmission and distribution industry. The copper connection section is for connection to copper conductors, for example local distribution cables for distributing electrical power to houses and buildings. There are many other applications where the transition from aluminium to copper conductors is required.

A removable or clamping type of connection between copper and aluminium is usually avoided because of oxidation and corrosion at the contact interface, particularly due to the different anodic potentials of copper and aluminium. A conventional means of overcoming the latter problem is by producing electrical connectors with connection sections of copper and aluminium that are securely bonded or attached together in an airtight manner. One means of performing a secure mechanical and electrical interconnection between copper and aluminium, is by friction welding. A first connection piece (for example of copper) is provided with a planar interface orthogonal to an axis of rotation about which the piece is rotated at high speed, and pressed against a complementary interface of a second connection piece (for example aluminium) until the heat generated causes fusion, thereby welding the abutting interfaces. This procedure is well adapted for first connection pieces that are axi-symmetric (e.g. cylindrical), and the interface circular. The disadvantage of the conventional connection production method is that if the two connection pieces require specific orientations with respect to each other, a method other than friction welding for bonding the parts is required. It is however desirable to produce a bi-metal connection with friction welding because of the particularly strong mechanical connection, and the reliable and long lasting electrical connection.

In non axi-symmetric connectors with bi-metal connection parts that are friction welded, it is typical to provide a cylindrical connection piece that is machined after friction welding. This is an expensive manufacturing procedure in view of the different machining steps and machine changes required.

It is an object of this invention to provide an electrical connector having a first connection section and a second connection section mechanically and electrically connected together in a reliable manner, where the first and second connection sections are positioned with respect to each other in a specified manner, in a cost effective method, in particular with low manufacturing costs.

Objects of this invention have been achieved by providing the method of producing an electrical connection according to claim 1. Disclosed herein is a method for producing a bi-metallic electrical connector comprising the steps of: providing a first connection piece of a first metal, and a second connection piece of a second metal, the first connection piece having a welding interface, and the second connection piece having a complementary welding interface; rotating the first and second connection pieces relative to each other, about an axis orthogonal to their interfaces; applying pressure on one of the connection pieces against the other piece such that the interfaces frictionally interengage and weld together; controlling the deceleration of the relative rotational speed; sense the relative angular position of the two connection pieces; and just prior to attaining a relative angular speed of zero, rotating the connection pieces relative to each other until the specified position is achieved, thereafter stopping relative rotation.

Advantageously therefore, the first and second pieces can be fully manufactured into non axi-symmetric shapes and subsequently friction welded together into a completed connector having connection pieces at specific orientations. A first connection piece could be statically clamped, whereas the second connection piece is a held in a mandrel of a rotating shaft connected to a motor, the shaft further comprising a position sensor interconnected to a programmable controller for controlling the angular velocity and position of the motor.

Further advantageous aspects of this invention will be set forth in the claims, or will be apparent from the following description and drawings.

An embodiment of this invention will now be described by way of example with reference to the figures in which;
figure 1 is an isometric view of a bi-metallic connector according to this invention;
figure 2 is a side view of the connector of figure 1;
figure 3 is a view in the direction of arrow 3 of figure 2;
figure 4 is a view in the direction of arrow 4 of figure 2;
figure 5 is a simplified cross sectional view of a machine for friction welding connection pieces;
figure 6 is a simplified block diagram of the control elements of the motor speed and position;
figure 7 is a cross sectional view of first and second connection pieces about to be friction welded;
figures 8, 9 and 10 are views of the connection pieces of figure 7 in successive stages of the friction welding process;
figure 11 is a graphic showing: the angular velocity (ω), the abutting force of the connection pieces (forge force (F)), material consumption (shortening of length (D)); with respect to time.

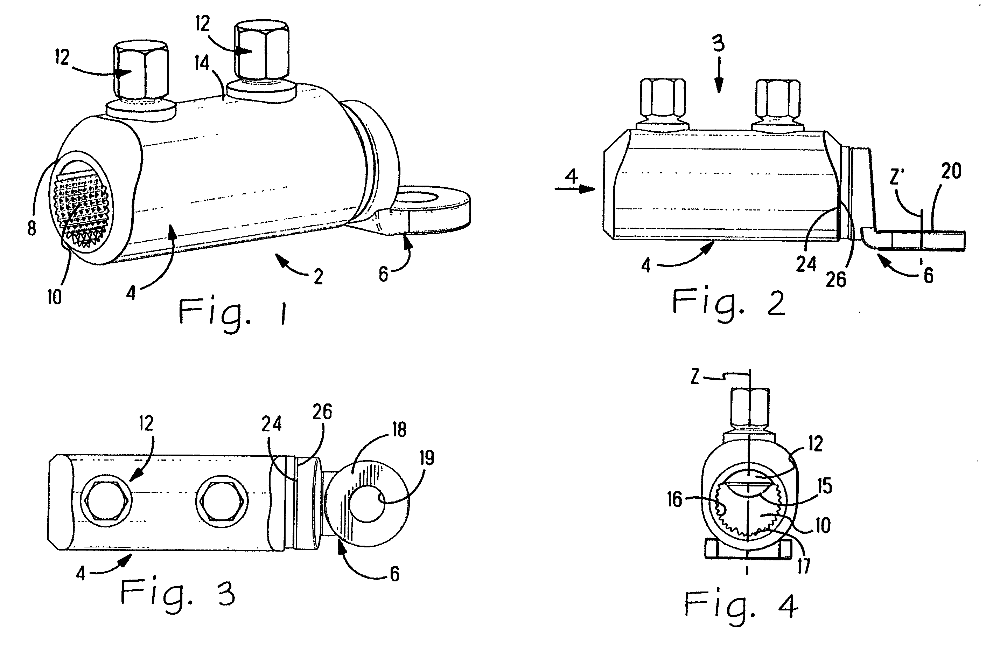

Referring to figures 1-4, an electrical connector 2 comprises a first connection section 4, and second connection section 6. The connection section 4 is in this embodiment made of an aluminium alloy, and has a tubular body 8 with a cavity 10 extending therein for receiving an aluminium alloy conducting cable of a power distribution line. Bolts 12 with shearable heads extend through threaded holes, from a top end 14 of the body into the cavity 10. A rounded bottom portion 15 of the bolts serve to compress the cable conductor within the cavity 10 against a plurality of teeth 16 along a bottom wall 17 of the cavity 10. The second connection piece 6 is in this embodiment of a copper alloy for connection to brass, copper, or copper alloy conductors that are clamped with a bolt through a ring tongue portion 18 of the second connection section. In this particular application, it is desired to maintain a specified angle between the first and second connection pieces, whereby the axis Z of the sheareable bolts 12 are substantially parallel to the axis Z' of the ring tongue portion cavity 19 (i.e. orthogonal to the contact surface 20 of the ring tongue portion 18). The first and second connection pieces 4, 6 are friction welded together at their cooperating interfaces 24, 26 respectively. The non axi-symmetric shape of the first and second connection sections 4, 6 is produced prior to friction welding, including the production of the threaded bolt holes of the first connection part, as will now be described.

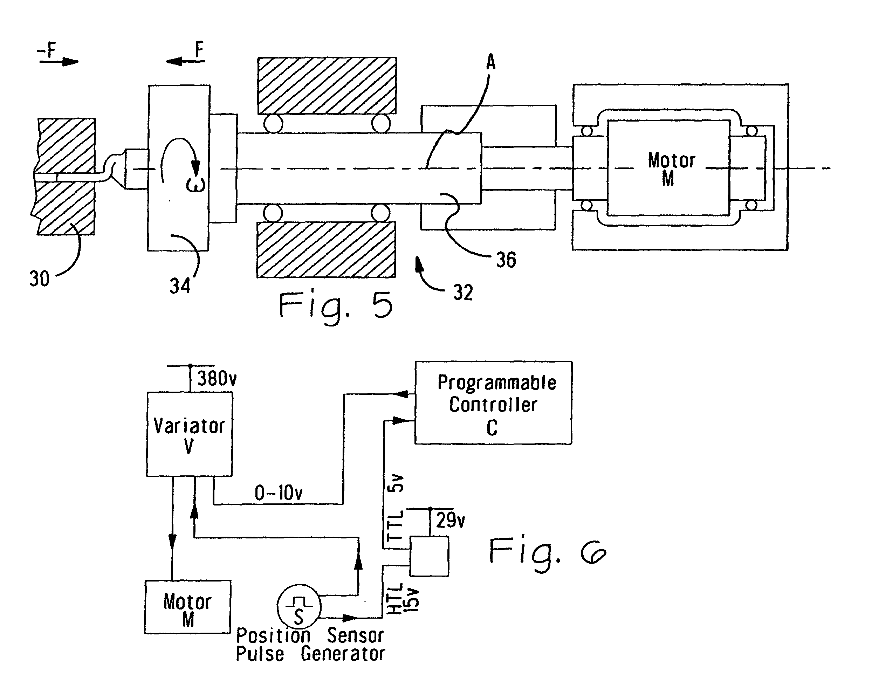

Referring to figures 5-11, the friction welding process will now be described. Initially, the connection pieces 4, 5 are separately manufactured, into their substantially completed form, whereby the first and second connection pieces have substantially planar circular interfaces 24, 26 that are preferably machined for producing a clean weld without asperities. The second connection piece 6 is clamped in a static position by jaws 30 of a friction welding machine 32 as shown in figure 5. The first connection piece 4 is mounted in a mandrel 34 of the machine that is interconnected via a shaft 36 to a motor M, the mandrel and shaft rotatably driven about an axis A by the motor. The first and second connection pieces are aligned such that the axis A extends through the center of their interfaces 24, 26. The clamping jaws 30 could also be rotatably movable, in order to effect a rotation in an opposite sense to the mandrel 34. Also, either the jaws 30 or the motor and shaft and mandrel 36, 34 are movable in the axial direction (in the direction of the axis A) such that the connection piece interfaces 34, 36 can be applied against each other with a controlled forging force F.

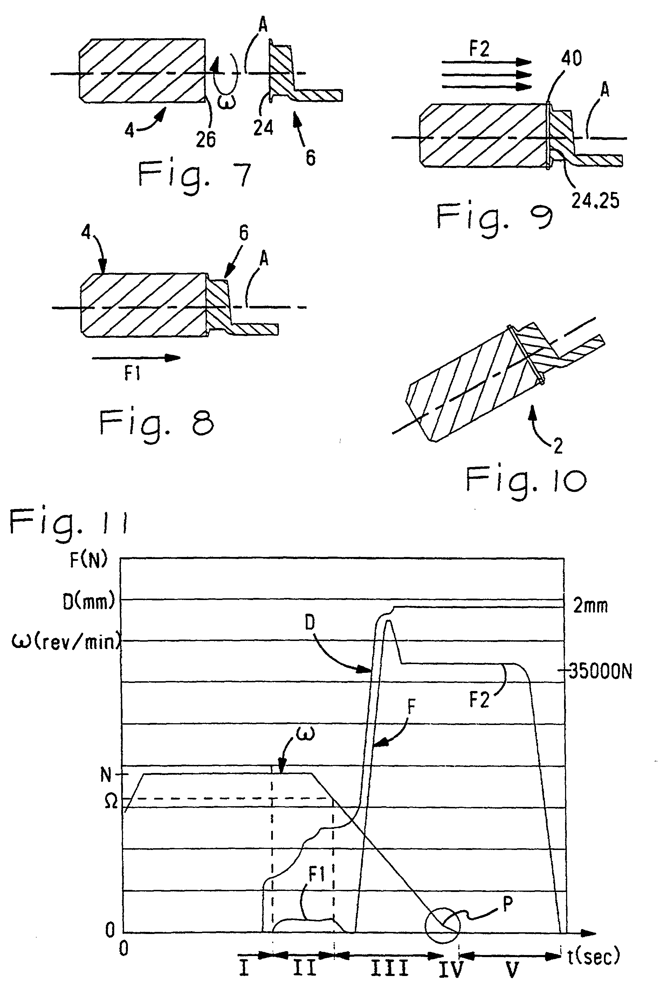

Initially, the motor is driven up to nominal speed N as shown in the curve ω in figure 1, section I. When the connection piece 4 is at a nominal speed, it is approached along the axis A to the second connection piece (or the second connection piece 6 may by moved axially instead) until the interfaces 24, 26 touch each other as depicted in figure 8, corresponding to the beginning of section II of figure 11. A certain pressure is applied, indicated by the force F1 such that the interfaces heat up from the frictional energy. During approach, friction removes irregularities such that the connection pieces 4, 6 approach each other as indicated by the material consumption curve D of figure 11. The material consumption curve D indicates the distance that the connection parts 4, 6 move towards each other along the axis A. The order of size of total material consumption is about 2 mm for the present connector. During application of the first friction force F1 the motor starts to decelerate until attainment of the angular velocity ω as shown in the graph of figure 11, at the end of section II, whereby the force is then increased to a level F2 which is a forging force as shown in section III of the graph of figure 11. Upon application of the forging force, the material consummation rapidly increases due to the molten material at the weld interface. The forging force F2 is maintained even after deceleration of the motor to angular velocity zero, as shown in sections IV and V, until the weld interfaces 24, 26 cool sufficiently prior to ejection of the completed connector 2 from the machine as shown in figure 10.

Prior to ejection of the connector from the machine, it is also possible to unclamp the second connection piece 6 from the machine jaws 30 and perform some lathe operations in order to clean off the burr of surplus weld material 40 resulting form the friction welding as shown in figure 9.

Referring to figure 11, of the angular velocity ω in section III shows substantially constant deceleration of the motor and mandrel. In section IV which is encircled, just prior to attainment of angular velocity zero (point P), the motor angular velocity is modified (corrected) such that the motor stops at a specified angular position. The specified angular position corresponds to the desired relative angular position of the connection pieces 4, 6 of the finished connector as shown in figures 1-4. From point P, a further last partial rotation of the mandrel relative to the jaws 30 is accomplished, to the desired final position.

The motor M or shaft, 36 is provided with a position sensor S that generates pulses for regular fractions of rotation of the motor. The pulses that are generated are fed to a programmable controller C, which continuously computes the velocity and angular position of the motor/shaft. The values are compared with programmed input values of final position, nominal speed, and deceleration curves for the particular connector to be welded. Comparison of the real velocity, deceleration, and position with desired values is computed into commands fed to a variator V which controls the power fed to the motor M. The motor may be provided with a brake in order to ensure precise stopping of the motor at the desired angular position, indicated by the beginning of section V in the graph of figure 11.

Advantageously, non axi-symmetric connection pieces can thus be friction welded together, without requiring further machining operations such as providing threaded bolt holes and the like after the friction welding process. A non axi-symmetric connector for power cables, in particular a bi-metallic connector can thus be provided in a cost effective manner whilst nevertheless ensuring robust mechanical, and reliable electrical connection.

## Claims

1. A method for producing a bi-metallic electrical connector (2) comprising the steps of: providing a first connection piece (4) having a first metal, and a second connection piece (6) having a second metal different to the first metal, the first connection piece having a welding interface (26), and the second connection piece having a complementary welding interface (24); rotating the first and second connection pieces relative to each other about an axis (A) orthogonal to their interfaces; applying pressure on one of the connection pieces against the other piece such that the interfaces frictionally interengage and weld together; characterised by the further steps of: controlling the deceleration of the relative rotational speed (ω); sensing (S) the relative angular position of the two connection pieces; and just prior to attaining a relative angular speed of zero, rotating the connection pieces (4, 6) relative to each other until the specified position is achieved, thereafter stopping relative rotation.

2. The method of claim 1 wherein the first connection piece is a held in a mandrel of a rotating shaft (36) connected to a motor (M), the shaft or motor comprising a position sensor (S) interconnected to a programmable controller (C) for controlling the angular velocity and position of the motor.

3. The method of claim 1 or 2 wherein the connection pieces (4, 6) are non axi-symmetric substantially completely manufactured prior to friction welding.

4. The method of claim 1, 2 or 3 wherein the first metal is an aluminium alloy, and the second metal is a copper alloy.

## Patentansprüche

1. Verfahren zur Herstellung eines elektrischen Bimetallverbinders (2), das die folgenden Schritte aufweist: Bereitstellen eines ersten Verbindungsteils (4) aus einem ersten Metall und eines zweiten Verbindungsteils (6) aus einem zweiten Metall, das vom ersten Metall abweicht, wobei das erste Verbindungsteil eine Schweißfläche (26) und das zweite Verbindungsteil eine komplementäre Schweißfläche (24) aufweist; Drehen des ersten und zweiten Verbindungsteils relativ zueinander um eine Achse (A) orthogonal zu ihren Anschlußflächen; Anwenden von Druck auf eines der Verbindungsteile gegen das andere Teil, so daß die Anschlußflächen reibschlüssig miteinander in Eingriff kommen und miteinander verschweißen; gekennzeichnet durch die weiteren folgenden Schritte: Steuern der Verminderung der relativen Drehzahl (ω); Messen (S) der relativen Winkelposition der zwei Verbindungsteile; und, genau vor dem Erreichen einer relativen Winkelgeschwindigkeit von Null, Drehen der Verbindungsteile (4, 6) relativ zueinander, bis die vorgeschriebene Position erreicht ist, danach Unterbrechen der relativen Drehung.

2. Verfahren nach Anspruch 1, bei dem das erste Verbindungsteil in einem Dorn einer sich drehenden Welle (36) gehalten wird, die mit einem Motor (M) verbunden ist, wobei die Welle oder der Motor einen Positionsmeßfühler (S) aufweist, der mit einem programmierbaren Regler (C) für das Steuern der Winkelgeschwindigkeit und der Position des Motors verbunden ist.

3. Verfahren nach Anspruch 1 oder 2, bei dem die Verbindungsteile (4, 6) nicht achsensymmetrisch sind, im wesentlichen vollständig vor dem Reibschweißen gefertigt.

4. Verfahren nach Anspruch 1, 2 oder 3, bei dem das erste Metall eine Aluminiumlegierung und das zweite Metall eine Kupferlegierung ist.

## Revendications

1. Procédé de production d'un connecteur électrique bimétallique (2) comprenant les étapes ci-dessous: fourniture d'une première pièce de connexion (4) comportant un premier métal, et d'une deuxième pièce de connexion (6) comportant un deuxième métal différent du premier métal, la première pièce de connexion comportant une interface de soudage (26) et la deuxième pièce de connexion comportant une interface de soudage complémentaire (24); mise en rotation des première et deuxième pièces de connexion l'une par rapport à l'autre autour d'un axe (A) orthogonal par rapport à leurs interfaces; application d'une pression à une des pièces de connexion, contre l'autre pièce, de sorte à entraîner l'engagement mutuel par friction des interfaces et leur assemblage par soudage; caractérisé par les étapes additionnelles ci-dessous: commande de la décélération de la vitesse de rotation relative (ω); détection (S) de la position angulaire relative des deux pièces de connexion; et, juste avant l'atteinte d'une vitesse angulaire relative égale à zéro, mise en rotation des pièces de connexion (4, 6) l'une par rapport à l'autre jusqu'à l'atteinte d'une position spécifiée, avant l'arrêt de la rotation relative.

2. Procédé selon la revendication 1, dans lequel la première pièce de connexion est retenue dans un mandrin d'un arbre de rotation (36) connecté à un moteur (M), l'arbre ou le moteur comprenant un capteur de position (S) interconnecté à un dispositif de commande programmable (C) pour assurer la commande de la vitesse angulaire et de la position du moteur.

3. Procédé selon les revendications 1 ou 2, dans lequel les pièces de connexion (4, 6) sont axialement non symétriques et fabriquées de façon pratiquement complète avant le soudage par friction.

4. Procédé selon les revendications 1, 2 ou 3, dans lequel le premier métal est un alliage d'aluminium, le deuxième métal étant un alliage de cuivre.
